# EUROPEAN PATENT APPLICATION

(11) **EP 2 308 921 A1**
(43) Date of publication of application: **13.04.2011**
(21) Application number: 09172678.6
(22) Date of filing: 09.10.2009
(51) Int. Cl.: C08K 7/04, F16D 69/02

(54) **Friction material with reduced noise, vibration and harshness generation, and process for the preparation thereof**

(71) Applicant: Rockwool International A/S, 2640 Hedehusene (DK)
(72) Inventor: Kerssemakers, Arnoldus Maria, 6065ES Montfort (NL); Van de Worp, Bart Johannes Elisabeth, 6137JW Sittard (NL); Smeets, Luc Johannes Petrus, 6049DX Herten (NL)
(74) Representative: Barz, Peter

(57) **Abstract**

A process for the preparation of a friction material with reduced noise comprising the step of incorporating inorganic fibre balls into a friction material formulation to obtain a friction material containing at least 1 % by weight of inorganic fibre balls, preferably mineral fibre balls.

## Description

The present invention relates to a friction material with reduced NVH (noise, vibration, harshness) generation and a process for the preparation thereof. The invention also relates to inorganic fibre balls suitable for these friction materials and a process for the preparation thereof.

Friction materials are widely used in a variety of applications. For instance, friction materials are required for brake or clutch devices and they are used e.g. in the form of brake pads, brake shoes, brake linings, friction plates and clutch facings. Examples of suitable application fields are industrial machines and transport systems or vehicles such as lifts, passenger cars, motorcycles, bicycles, trucks, railway vehicles, aircrafts, baggage cars and cable cars.

The composition of friction materials may vary with respect to constituents used and the relative amounts thereof, depending on the desired properties of the friction material and the friction material system employed. Classifications of friction material systems are e.g. metallic, semi-metallic, low-steel, non-asbestos organic, NAO/non-steel (also called "ceramic") friction materials. Usually however the following components are contained in a friction material formulation: a) a binding agent (matrix forming component), b) reinforcing fibres, c) fillers, and d) frictional additives such as abrasives and lubricants.

WO 99/19396 relates to the use of mineral fibres for reinforcement of thermoplastic or thermosetting materials and aims at providing a more uniform distribution of mineral fibres in the polymer matrix and an improved reinforcing effect. This documents describes the use of a free-flowing mineral fibre granulate comprising mineral fibres coated with or embedded in a wetting agent or compatibilizer which allows the fibres to be uniformly distributed easily in the thermoplastic or thermosetting material, i.e. the fibre granulate opens into loose fibres during mixing with the polymer and the fibres are uniformly distributed in the polymer matrix. Mineral fibre aggregates are also employed in insulation applications. For instance, WO 2006/081137 relates to a method of producing thermal or acoustical insulation in a cavity of a structure comprising feeding clumps, nodules or mixtures thereof into a blowing machine whereby the mineral fibre insulation is suspended in an air stream and blown through a hose connected to the blowing machine, passing the air-suspended clumps, nodules or mixtures thereof through a shredder to produce a stream of air-suspended insulation pills, accelerating to increase the velocity of said pills, and directing the stream of air-suspended pill clumps into a building cavity causing most of the pills to stick to the cavity walls or to each other to form the thermal insulation.

When friction materials are in service, frequently the problem arises that noise development occurs. Since such noise development is usually undesirable, a need was felt in industry for friction materials exhibiting a reduced noise development in service. Known noise suppressors are mica, vermiculite, cashew dust, and rubber dust which are used as fillers in friction materials (see e.g.: D. Chan, G.W. Stachowiak, Review of automotive brake friction materials, Proc. Instn Mech. Engrs Vol. 218 Part D: J. Automobile Engineering, p. 953-966). However, mica and vermiculite which reduce low-frequency brake noise cause interlayer splitting in friction materials or have a low heat resistance. Cashew and rubber dust are organic components that cause a poor high temperature performance resulting in a high drop in friction level (fading) and high wear at high temperatures.

A friction material with reduced noise refers to the noise generated when the friction material is in service. The characteristics of a friction material play an important role for the NVH of a vehicle. NVH is an acronym for "Noise Vibration Harshness" and is a measure of vehicle "feel" which is a combined measure of (1) the noise level in the vehicle during driving; (2) the vibration that can be felt by the customer during driving, and (3) the harshness of the vehicle ride during abrupt transitions in vehicle motion.

The object of the present invention was to provide friction materials having a reduced noise, i.e. an improved reduced noise development when in service, and which do not suffer from the drawbacks of the materials according to the prior art.

Surprisingly, this object was achieved by incorporating inorganic fibre balls, preferably mineral fibre balls, into friction materials. The presence of these high temperature stable inorganic fibre balls in the friction materials significantly reduces the noise associated with the use of the friction materials.

Thus, the present invention provides a process for the preparation of a friction material with reduced noise development comprising the step of incorporating inorganic fibre balls, preferably mineral fibre balls, into a friction material formulation to obtain a friction material containing at least 1 % by weight of inorganic fibre balls. The friction material of the present invention surprisingly exhibits reduced noise and an improved NVH in service compared to a corresponding friction material not containing fibre balls. The invention is described in more detail in the following.

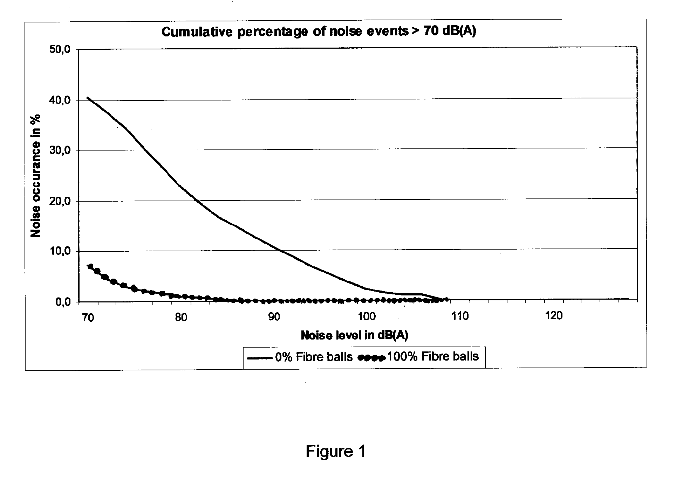

Figure 1 shows the noise development in a friction material comprising dispersed fibres (comparison) and in a friction material comprising fibre balls (invention).

The inorganic fibre of the inorganic fibre balls may be any one known to the person skilled in the art. A general review of inorganic fibres which can be used in accordance with the present invention is given e.g. in Ullmanns Encyklopädie der technischen Chemie, 4th edition, vol. 11, p. 359 to 390, Verlag Chemie 1976, the entire disclosure of which is incorporated herein by reference. Inorganic fibres may be metal fibres or non-metal fibres, non-metal fibres being preferred. Examples of non-metal fibres are carbon fibres and mineral fibres including ceramic fibres, glass fibres, quartz fibres and fused silica fibres. Ceramic fibres may be oxide ceramic fibres, e.g. alumina fibres and zirconia fibres, and non-oxide ceramic fibres, e.g. boron fibres, carbide fibres and nitride fibres.

Mineral fibres are known in the art and widely used, for instance in insulation products. Mineral fibres may be crystalline, such as ceramic fibres and more generally comprise man-made vitreous fibres (MMVF) such as, e.g., glass fibres, basalt fibres, slag fibres, mineral fibres and stone fibres. Mineral fibres are generally composed of silicate glass, in particular aluminium silicate glass, typically including also oxides of one or more other elements such as e.g. Ca, Mg, Ti, Na, K, B, Ba or Fe. A typical example is a calcium magnesium aluminium silicate glass which may include iron oxide and optionally other metal oxides. More information on mineral fibres may be found e.g. in "Man-made Vitreous Fibres: Nomenclature, Chemical and Physical properties" by the Nomenclature Committee of TIMA Inc. (Revision 2, March 1, 1993).

Specific examples of inorganic fibres suitable for the present invention are oxide fibres, such as alumina fibres and zirconia fibres, carbide fibres, such as silicon carbide fibres, boron carbide fibres, niobium carbide fibres; nitride fibres, such as silicon nitride fibres; boron containing fibres, such as boron fibres, boride fibres; silicon-containing fibres, such as silicon fibres, alumina-boron-silica fibres, E-glass (non-alkaline alumoborosilicate) fibres, C-glass (non- alkaline or low-alkaline soda lime-alumoborosilicate) fibres, A-glass (alkaline soda lime- silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, potassium aluminium silicate fibres; metal fibres, such as iron fibres, aluminium fibres, steel fibres, iron fibres, zinc fibres; carbon fibres, such as carbon fibres, graphite fibres, charcoal fibres; slagwool fibres, rockwool fibres, such as pure rockwool fibres and basalt rockwool fibres; processed mineral fibres from mineral wool; volcanic rock fibres; attapulgite fibres; wollastonite fibres; tobermorite fibres; and attapulgite fibres.

A single type of inorganic fibre or two or more types of inorganic fibres may be used for the inorganic fibre balls. The inorganic fibres may be modified by any chemical or physical process known in the prior art.

Preferably, the inorganic fibres are mineral fibres with MMVF fibres such as basalt fibres, slag fibres, and stone fibres being particularly preferred. Hence, the inorganic fibre balls are preferably mineral fibre balls. Unless indicated otherwise, all statements given in this specification in conjunction with inorganic fibres particularily apply to the specific case where the inorganic fibres are mineral fibres.

Mineral fibres are generally produced by converting a mineral melt made of suitable raw materials to fibres in a conventional manner using a nozzle or spinning technique, for instance by a spinning cup process or by a cascade rotor process. For mineral fibres made by a cascade rotor process, the output contains a mixture of fibres and shots is generally granulated and packaged, and then adjusted to a certain mineral fibre length. The mineral fibre mixtures obtained mainly consist of loose mineral fibres. A mineral fibre mixture such as a rock fibre mixture typically includes a certain content of non-fibrous material such as shots, the content of which may vary depending on the manufacture process employed. Such mineral fibre mixtures are commercially available.

It is known that inorganic fibres such as mineral fibres may be treated with particular compounds such as coupling agents so that such compounds are applied on the inorganic fibres. For instance, inorganic fibres such as mineral fibres treated with a coupling agent may be obtained by spraying the coupling agent on the inorganic fibres immediately after the fibres have been generated, i.e. while they are still hot. Such treated inorganic fibres, preferably mineral fibres, may be also used in the preparation of inorganic fibre balls according to the invention.

Loose inorganic fibres mean single individual fibres which are not entangled with each other. In particular when included in a matrix, loose fibres may be also referred to as dispersed fibres. Inorganic fibre balls as used herein are interwoven or entangled inorganic fibres forming "balls", i.e. agglomerated inorganic fibres. These inorganic fibre balls or agglomerates may be also referred to as granules.

The non-fibrous material (shot) content of inorganic fibres, in particular mineral fibres is determined by using sieves. Depending on which fraction is specified for a certain product, the mass of the non-fibrous material left in the sieve with the specified mesh is determined. The shot percentage is then calculated as follows: Shot fraction = weight shot/ weight sample x 100 %.

The fibre ball size is determined by using sieves. Each mass of the fibre balls left in the sieves with a specified mesh is determined. From the data obtained, the weight average of the fibre ball size is calculated.

The length and the diameter of the inorganic fibres, preferably mineral fibres, of the inorganic fibre balls may vary within wide ranges. Appropriately, the inorganic fibre weight average length of the inorganic fibres which form the inorganic fibre balls according to the invention is, for instance, within the range of 100 to 300 µm and preferably within the range of 125 to 175 µm. Appropriately, the inorganic fibre mass weighted average diameter of the inorganic fibres, preferably mineral fibres which form the inorganic fibre balls according to the invention is, for instance, within the range of 5 to 15 µm and preferably within the range of 7 to 10 µm.

The size of the inorganic fibre balls, preferably mineral fibre balls according to the invention may vary within wide ranges. It is however preferable that the weight average of the ball size for the fibre balls is not more than 5 mm, more preferably not more than 3 mm, and most preferably not more than 1.5 mm. It has been shown that larger balls may result in an unpleasant visual appearance of the friction material. The weight average fibre ball size is preferably within the range of 0.5 to 1.5 mm.

When inorganic fibre balls, preferably mineral fibre balls are incorporated in a friction material formulation which is usually a compounding process, the inorganic fibre balls are subject to mechanical load. If the fibre balls do not have a sufficient strength, the fibre balls open into loose mineral fibres due to this mechanical load. According to the present invention, the inorganic fibre balls have a sufficient strength in order to remain as inorganic fibre balls to a high degree when incorporated into the friction material formulation. This is because the noise reduction effect in the friction material is only achieved when the friction material contains the inorganic fibres as balls.

The friction material of according to the present invention which is obtainable by the process of the invention contains at least 1 % by weight of inorganic fibre balls, preferably mineral fibre balls, based on the total weight of the friction material. While the content of the fibre balls may vary within wide ranges, the friction material generally contains 1 to 30 wt.%, preferably 5 to 25 wt.% and more preferably 10 to 20 wt.%, of inorganic fibre balls, preferably mineral fibre balls.

The inorganic fibre balls according to the present invention may be prepared from inorganic fibre mixtures, preferably mineral fibre mixtures mainly comprising loose inorganic fibres. Such mixtures are commercially available. Though the dimension of the inorganic fibres employed is not critical, inorganic fibres having length and diameter values as mentioned above are preferred.

In a preferred process for the preparation of inorganic fibre balls, inorganic fibres are mixed in a mixer. By this mixing process loose inorganic fibres are agitated or rolled against each other so that agglomeration occurs to form the inorganic fibre balls. The mixer preferably provides a circular motion. It is more preferred to mix the inorganic fibres, preferably mineral fibres, with a liquid in a mixer and drying the obtained mixture to obtain inorganic fibre balls. The presence of the liquid enhances the firmness of the fibre balls obtained. The liquid used should be vaporizable. A low viscosity liquid is preferable. Examples for suitable liquids are water and organic solvents, e.g. alcohols, water based emulsions and mixtures thereof. Preferred liquids are water and water based emulsions. The liquid and the inorganic fibres may be simply fed into the mixer. It is also possible to spray the liquid on the inorganic fibres which may cause a better preliminary distribution of the liquid on the fibres. It is further preferred that the liquid employed contains a binder since the binder further improves the firmness of the fibre balls obtained.

The inorganic fibres used for preparing the inorganic fibre balls are preferably relatively short fibres, otherwise the liquid cannot be distributed well on the fibre surface. Appropriate fibre lengths are given above. Appropriately, the inorganic fibres are in the form of loose inorganic fibres or predominately in the form of loose inorganic fibres.

In the preferred mixing step, the inorganic fibres are mixed with the liquid, preferably containing a binder, so that the liquid is distributed on the surface of the fibres. In addition, the inorganic fibres are moved, preferably by a circular motion, so that the inorganic fibres agglomerate or ball up, respectively, to form the inorganic fibre balls. Hence, the mixing step preferably comprises mixing the inorganic fibres, preferably mineral fibres, with the liquid, preferably containing the binder, and rolling the mineral fibres on which the liquid is distributed to form the inorganic fibre balls. The liquid supports the formation of the balls. In general, the mixing step may optionally comprise two stages: a first more vigorous mixing to achieve mixing of the liquid with the inorganic fibres, and a second more gentle mixing or rolling in order to ball up the mineral fibres on which the liquid is distributed.

The mixer employed in the mixing step may be any common mixing device generally known in the art, for instance a horizontal mixer or a vertical mixer. It may be useful that the mixer includes choppers, e.g. a vertical or horizontal mixer having choppers. Appropriately, the mixing time may be in the range of 1 to 20 minutes and preferably in the range of 2 to 8 minutes. Appropriately the head axle speed is in the range of 50-300 rpm. The mixing process preferably consists of a first stage with choppers rotation, e.g. at 2500-3500 rpm or approximately at 3000 rpm, to distribute the liquid and a second stage without chopped activity for maximum ball formation. The mixing parameters however may vary depending on the type of inorganic fibres, the mixer, the ball size desired, etc.

If a liquid is used for the preparation, the product obtained containing inorganic fibre balls needs to be dried when discharged from the mixer because products with a too high liquid content cannot be tolerated in friction materials. In the drying step, the liquid is evaporated from the inorganic fibre balls for which commonly known methods can be used, e.g. drying in an oven (static drying), drying in a dispersion dryer or drying in a fluid bed dryer. The drying step may result in a complete removal of the liquid, though a small amount of liquid remaining in the fibre balls may be acceptable. When water is used as the liquid, the formed fibre balls are not very strong after drying so that the balls may be opened too easily when they are mixed into a friction material formulation if the mechanical load is too high. The inventors surprisingly found that inorganic fibre balls, preferably mineral fibre balls, having a remarkably improved strength can be obtained when the inorganic fibres are mixed with a liquid containing a binder which is a preferred embodiment according to the invention. The fibre balls thus obtained are very "strong" after drying and are hardly opened when mixed into the friction material formulation. It is believed that the improved strength of the inorganic fibre balls is caused by the binder on the fibre surface sticking together the fibres after drying.

As a binder, it is possible to use organic and inorganic binders which are known to the person skilled in the art. A single binder or a mixture of two or more binders may be used. Examples of suitable binders are acrylic resins such as acrylates or methacrylates, alkyd resins, saturated and unsaturated polyester resins, polyurethanes based on di- or polyisocyanates and di- or polyols, epoxy resins, silicone resins, urea resins, melamine resins, phenolic resins, waterglass, alkyl silicate binders, cellulose esters, such as esters of cellulose with acetic acid or butyric acid, polyvinyl resins such as polyolefins, polyvinylchloride, polyvinylidene chloride, polyvinyl alcohol, polyvinyl acetate, polyvinyl ether, polyvinyl ester, polyvinyl pyrrolidone and polystyrene resins and derivatives and copolymers of these polyvinyl resins, nitrocellulose, chlorinated rubbers, glucose and oil varnishes.

More specific examples of the binder include polyvinylacetate resin, vinylchloride-vinylacetate copolymer, polyacrylonitrile resin, polycarbonate resin, polyamide resin, butyral resin, polyurethane (PU) resins, vinylidenechloride-vinylchloride copolymer, styrene-butadiene copolymer, vinylidenechloride-acrylonitrile copolymer, vinylchloride-vinylacetate-maleic anhydride copolymer, silicone-alkyd resin, phenol-formaldehyde resin, styrene-alkyd resin, benzoguanamine resin, epoxyacrylate resin, urethaneacrylate resin, poly-N-vinylcarbazole resin, polyvinylbutyral resin, polyvinylformal resin, polysulfone resin, casein, gelatin, ethylcellulose, carboxymethyl cellulose, vinylidenechloride-based polymer latex, acrylonitrile-butadiene copolymer, styrene butadiene rubber (SBR), vinyltoluene-styrene copolymer, soybean oil-modified alkyd resin, nitrated polystyrene resin, polymethylstyrene resin, polyisoprene resin, polyarylate resin, polyhaloarylate resin, polyaryl ether resin, polyvinylacrylate resin, and polyesteracrylate resin. Suitable binders are e.g. SBR and PU based binders.

The liquid containing a binder may be an aqueous or non-aqueous solution or dispersion and is preferably a latex, latex emulsion or polymer dispersion. The liquid is preferably water or an aqueous liquid. The liquid containing a binder is preferably a water based emulsion.

The content of binder in the liquid may vary. Generally, the binder content in the liquid is suitably in the range of 10 to 90 % by weight, preferably 30 to 60 % by weight. The ratio of liquid to inorganic fibre, preferably mineral fibre, to be mixed may vary, but an appropriate ratio by weight of liquid to inorganic fibre may be in the range of 1 to 30 %, a range of 5 to 15 % being preferred, wherein the liquid refers to the liquid employed, i.e. optionally including the binder and/or other additives.

Apart from the binder, the liquid may also contain other additives, but generally it is not advantageous to add such further additives. In particular, the inorganic fibre balls, preferably mineral fibre balls according to the invention generally do not include inorganic fibres having wetting agents or surfactants on the fibre surface. This is because wetting agents and surfactants generally weaken the strength of the mineral fibre balls resulting in an opening of the balls and a homogeneous distribution of the fibres in the friction material formulation. Accordingly, it is generally preferred that the liquid used for preparing mineral fibre balls does not include wetting agents or surfactants.

With the process of preparing inorganic fibre balls described above, wherein preferably inorganic fibres are mixed with the binder-containing liquid and subsequently dried, it is possible to prepare inorganic fibre mixtures, preferably mineral fibre mixtures, which include more than 80 % by weight and up to 100 % by weight, preferably more than 90 % by weight of inorganic fibre balls and up to 100 % by weight, based on the total weight of the mineral fibre mixture. That is, the inorganic fibre mixture obtained includes 20 % by weight or less and preferably 10 % by weight or less of loose inorganic fibres. In addition, it is preferable that the inorganic fibre mixture, in particular the mineral fibre mixture, obtained is essentially free of shots which means that shots of > 125 micron are included in the inorganic fibre mixture in an amount of from 0 to at most 0.2 % by weight. The described process of the invention even allows the preparation of inorganic fibre mixtures containing approximately 100 % by weight of mineral fibre balls. With the process described, inorganic fibre balls, in particular mineral fibre balls, having a small average size (< 2 mm) can be prepared.

The inorganic fibre mixture, preferably the mineral fibre mixture, containing inorganic fibre balls as described above may be used as is for the incorporation into the friction material formulation as discussed below. Since loose inorganic fibres such as mineral fibres may also have a beneficial effect on friction materials with respect to reinforcement, it is also possible to mix the inorganic fibre mixture mainly comprising inorganic fibre balls as described above with a common inorganic fibre mixture mainly comprising loose inorganic fibres in order to obtain a inorganic fibre mixture with an adjusted content of inorganic fibre balls in accordance with the user's need. Thus, inorganic fibre mixtures, in particular mineral fibre mixtures, can be prepared and used for incorporation into the friction material formulation. Alternatively, it is of course also possible to incorporate inorganic fibre mixtures containing inorganic fibre balls according to the process of the invention and normal loose inorganic fibres mixtures into the friction material formulation separately.

The friction material formulation refers to a mixture of the components used for preparing the friction material. By incorporating the inorganic fibres, preferably mineral fibres, or inorganic fibre balls, preferably mineral fibre balls, respectively, into the friction material, the inorganic fibres or inorganic fibre balls, respectively, are added to or mixed with the components. The order of mixing the components of the friction material formulation and the inorganic fibres or inorganic fibre balls, respectively, is not restricted. That is, the inorganic fibre balls, preferably the mineral fibre balls, may be e.g. added to the binding agent of the friction material and mixed, and at the same time or subsequently other components of the friction material formulation such as reinforcing fibres, fillers or frictional additives may be added. Any other order is also possible. It may however be advantageous to add the inorganic fibre balls, preferably mineral fibre balls, to a pre-mix of all or most of the other components of the friction material composition in order to minimize the mechanical load applied to the inorganic fibre balls.

In a preferred embodiment, 5 % by weight to 100 % by weight, preferably from 10 % by weight to 100 % by weight, of the total amount of mineral fibres added in the friction material formulation are mineral fibre balls, the remainder being loose mineral fibres. In addition, the friction material may contain other inorganic fibres. In another embodiment it may be suitable that 5 % by weight to 100 % by weight, preferably from 10 % by weight to 100 % by weight, of the total amount of inorganic fibres added in the friction material formulation are inorganic fibre balls, the remainder being loose inorganic fibres.

The friction material refers to the product obtained after forming and hardening the friction material formulation in which the inorganic fibre balls have been incorporated and includes also those products wherein the friction material was subjected to an after-treatment such as scorching, cutting, polishing, gluing on substrates. The hardening may be a simple hardening or solidification, e.g. by solvent removal from the formulation or cooling. Preferably the friction material formulation is hardened by curing the friction material formulation or the binding agent, respectively.

Any friction material formulation which is known in the art may be used for the present invention. As mentioned above, the formulation of friction materials may vary with respect to constituents used and the relative amounts thereof depending on the desired properties of the friction material and the friction material system used. However, the friction material formulation usually comprises a binding agent which holds the components of the friction material together (matrix forming component), and reinforcing fibres which provide for mechanical strength. In the majority of cases, the friction material formulation also comprises at least one of fillers which reduce the cost and may improve processability, and frictional additives such as abrasives or lubricants which determine the frictional properties of the friction material. Examples of components for usual friction material formulation which may be used according to the present invention are discussed in the following. The friction material formulation usually comprises one or more binding agents. After hardening, preferably curing, the binding agents maintain the structural integrity under mechanical and thermal stress. The binding agent forms the matrix in which the other components are embedded.

The binding agent may be organic or inorganic but usually and preferably an organic binding agent is used. Thermosetting and thermoplastic binding agents may be employed, thermosetting binding agents being preferred. Examples of suitable binding agents for the friction material formulation are phenolic resins including phenol-formaldehyde resins, e.g. novolac resins, so-called COPNA resins (condensed polynuclear aromatic resins), silicone-modified resins also referred to as phenolic siloxane resins which are reaction products of silicone oil or silicone rubber and phenolic resins, cyanate ester resins, epoxy-modified resins, such as epoxy-modified phenolic resins, epoxy resins in combination with specific curing agents such as anhydrides, polyimide resins, e.g. a product of a fluoro resin and calcium carbonate. Preferred binding agents are phenolic based resins, in particular phenol-formaldehyde resins. When using phenolic resins, these are often modified with tougheners such as epoxy resin or filled with wood flour. COPNA resins are often used in combination with graphite.

In addition, the friction material formulation usually comprises one or more reinforcing fibres. In a friction material formulation typically a mixture of different types of reinforcing fibres with complementing properties are used. Examples for reinforcing fibres are glass fibres, mineral fibres, metallic fibres, carbon fibres, aramid fibres, potassium titanate fibres, sepiolite fibres and ceramic fibres. Metallic components for reinforcement may also have a shape other than a fibre shape. As is usual in the art, in the present application all metallic components included in the friction material are considered as metallic reinforcing fibres whatever the shape thereof is (fibre, chips, wool, etc.). Examples of metallic fibres include steel, brass and copper. Since steel fibres often suffer from the drawback of rusting, zinc metal is often distributed over the friction material when steel fibres are used. Metallic fibres may be oxidized or phosphatized. An example of aramid fibres are Kevlar fibres. Ceramic fibres are typically made of metal oxides such as alumina or carbides such as silicon carbide. In a preferred embodiment, the friction material formulation comprises loose mineral fibres as reinforcing fibres. Hence, in a preferred embodiment the friction material formulation used in the present invention to prepare the friction material includes mineral fibres as balls for reduction of noise development and/or loose mineral fibres for reinforcement. Further, it is preferred that the reinforcing fibres used are a mixture of different types of reinforcing fibres comprising loose mineral fibres.

The friction material formulation typically comprises one or more fillers. The fillers may be organic or inorganic. Examples of common fillers are barium sulfate, calcium carbonate, mica, vermiculite, alkali metal titanates, molybdenum trioxide, cashew dust, and rubber dust. Further examples are sillimanite, mullite, magnesium oxide, silica, and iron oxide. The fillers sometimes play also a role in modifying certain characteristics of the friction material, e.g. enhancement of heat stability or noise reduction. Therefore, the specific filler to be used depends on the other constituents of the friction material. Mica, vermiculite, cashew dust, and rubber dust are known as noise suppressors.

The friction material formulation typically also comprises one or more frictional additives in order to modify the friction coefficient as well as the wear rate. They are divided in two main categories: lubricants which decrease friction coefficients and wear rates and abrasives which increase friction coefficients and wear rates. Examples of typical lubricants are graphite and metal sulfides such as antimony sulfide, tin sulfide, copper sulfide and lead sulfide. There are many different abrasives having differing hardness ranging from mild abrasives such as quartz to alumina having a high hardness. Abrasives typically have Mohs hardness values of around 7 to 8. Examples of abrasives are metal oxide abrasives and silicates abrasives, e.g. quartz, zirconium silicate, zirconium oxide, aluminium oxide and chromium oxide.

The friction material formulation may also comprise other additives which are known in the art, for instance curing agents or crosslinkers for curing the binding agent, if necessary, or solvents, e.g. as a carrier for the binding agent or to adjust the viscosity of the formulation.

As mentioned, the specific formulation of friction materials may vary with respect to constituents used depending on the desired properties of the friction material. Friction materials can be roughly divided into metallic, semi-metallic, low-steel, and non-asbestos organic, NAO/non-steel (also called "ceramic") friction materials depending on the metal content. A metallic friction material is predominantly metallic. Semi-metallic friction materials typically include about 30 to 65 vol% of metallic components. Low-steel friction materials typically include about 5 to 25 vol% of metallic components. Non-asbestos organic materials are free of asbestos. NAO/non-steel or ceramic friction materials are free of steel components.

Worldwide, there are essentially three formulation concepts or formulation 'families' used to manufacture passenger vehicle disc pads: semi-metallic (see e.g. US-A-3835118, although the patent refers to a lining application, the formulation is typical for semi-metallic disc pads), low-steel (see e.g. EP-A-1138972) and NAO/non-steel (see e.g. US-A-20090785, also called 'ceramic'). As passenger vehicle disc pads are a preferred application for the friction materials according to the invention, the friction materials of the present invention are preferably semi-metallic, low-steel or NAO/non-steel or ceramic formulations. The inorganic fibre balls, in particular the mineral fibre balls are also suitable for noise reduction in other friction applications such as passenger car and commercial vehicle linings, industrial friction materials, railway blocks, railway pads, friction papers and clutches.

The components of the friction material formulation including the inorganic fibre balls may be mixed using common friction material mixing techniques. The components may be mixed together in a dry or wet form. The friction material formulation is then usually formed to the desired shape in a known manner, e.g. by moulding or pressing in a mould. The forming procedure may be carried out with or without heating. After or during forming, the friction material formulation is preferably hardened, more preferably cured to obtain the friction material. Curing is also effected in the usual manner, e.g. by heating the formulation, for instance in a curing oven.

The friction materials of the present invention may be used for all applications in which known friction materials are used, in particular for brake or clutch devices. The friction materials of the present invention are, for instance, useful as brake pads or disk pads, brake shoes, brake linings, friction plates and clutch facings, and can be employed, for instance, in industrial machines and transport systems or vehicles such as lifts, passenger cars, motorcycles, bicycles, trucks, railway vehicles, aircrafts, baggage cars and cable cars. The preferred application for the friction material including inorganic fibre balls, preferably mineral fibre balls, according to the present invention is passenger vehicle disc pads.

The present invention will be further illustrated by the following examples which are however not intended to limit the scope of the invention in any way.

### Example 1 - Preparation of mineral fibre balls

A batch of relatively short (125-175 micron) mineral fibres is put in a horizontal mixer with choppers. Then the head axle of the mixer (100-200 rpm) is started together with the choppers (3000 rpm) and a liquid which is a latex (water having a content of binder of about 12 wt.-%, e.g. SBR or PU based binder) is dosed at once in a few seconds. It is not necessary to spray the latex very fine into the mixer. The choppers will do the work to distribute the liquid on the fibre surface. After 2 minutes mixing with using the choppers the fibres are coated with the liquid and the choppers are turned off. The mixture is mixed for further 5 minutes only using the head axle of the mixer in order to form the mineral fibre balls.

Then the mix is ready to be dried. The drying step may be done by heating in an oven or preferably by fluid bed drying. Small mineral fibre balls (< 2 mm) are obtained and form > 90 % of the product.

### Example 2 -Noise reduction comparison test

A comparison was made of the noise performance of a friction material based on a NAO/non-steel disc pad formulation and containing 14 wt.-% of dispersed mineral fibres and the same friction material containing 14 wt.-% of mineral fibre balls.

The noise test schedule consists of more than 1400 braking sections. During each braking the noise level and noise frequency was registered. Figure 1 shows the noise development in the friction material comprising dispersed fibres and fibre balls. In the figures the noise level > 70 dB during every stop is represented as a dot and plotted against the noise frequency. Every dot corresponds one noisy stop during the test. When there would occur no noise at all during the whole test, the figure thus would be empty.

As can be seen, the fibre balls have a pronounced positive effect on the noise performance of the friction material. Especially, the loud noise (> 80 dB) occurrence is reduced significantly by about 96%. The results are summarized in the following table.

| | 100% dispersed fibres | 100% fibre balls |
|---|---|---|
| noisy stops > 70 dB (%) | 40.4 | 7.3 |
| noisy stops > 80 dB (%) | 26.6 | 1.0 |
| noisy stops > 90 dB (%) | 10.7 | 0.0 |

## Claims

1. A process for the preparation of a friction material with reduced noise comprising the step of incorporating inorganic fibre balls into a friction material formulation to obtain a friction material containing at least 1 % by weight of inorganic fibre balls.

2. The process according to claim 1, wherein the inorganic fibre balls are mineral fibre balls.

3. The process according to claim 1 or claim 2 wherein the inorganic fibre balls to be incorporated in the friction material formulation are prepared by mixing and agglomerating inorganic fibres to form inorganic fibre balls.

4. The process according to any of claims 1 to 3 wherein the inorganic fibre balls to be incorporated in the friction material formulation are prepared by mixing inorganic fibres with a liquid and drying the mixture to obtain inorganic fibre balls, wherein the liquid preferably comprises a binder.

5. The process according to any one of claims 1 to 4, wherein the inorganic fibre balls have a weight average size of not more than 3 mm.

6. The process according to any one of claims 1 to 5, wherein the friction material formulation comprises a thermosetting resin.

7. The process according to any one of claims 2 to 6, wherein mineral fibres are incorporated into the friction material formulation with from 5 % by weight to 100 % by weight, preferably 10 % by weight to 100 % by weight, of the total amount of mineral fibres added being present in the form of mineral fibre balls, the remainder being loose mineral fibres.

8. The process according to any one of claims 1 to 7, wherein the inorganic fibre balls are added to the friction material formulation in form of an inorganic fibre mixture which is essentially free of shot.

9. The process according to any one of claims 1 to 8, comprising the step of forming and hardening, preferably curing, the friction material formulation in which the inorganic fibre balls are incorporated to obtain the friction material.

10. A friction material with reduced noise, wherein the friction material contains at least 1 % by weight of inorganic fibre balls.

11. A friction material according to claim 10, wherein the inorganic fibre balls are mineral fibre balls and from 5 % by weight to 100 % by weight, preferably from 10 % by weight to 100 % by weight, of the total amount of mineral fibres contained in the friction material are mineral fibre balls, the remainder being loose mineral fibres.

12. The friction material according to claim 10 or claim 11, wherein the friction material is a brake pad or disk pad, brake shoe, brake lining, friction plate or clutch facing.

13. The friction material according to any one of claims 10 to 12, wherein the friction material comprises a thermoset resin.

14. The friction material according to any one of claims 10 to 13, wherein the inorganic fibres constituting the inorganic fibre balls are bonded to each other by a binder.

15. Use of inorganic fibre balls in a friction material for reducing the noise of the friction material in service.

16. A process for preparing inorganic fibre balls wherein inorganic fibres are mixed with a liquid comprising a binder and the obtained inorganic fibre balls are dried to obtain inorganic fibre balls comprising inorganic fibres bonded to each other by the binder.

17. Inorganic fibre balls comprising inorganic fibres bonded to each other by a binder, obtainable by the process of claim 16.
